# EUROPÄISCHE PATENTSCHRIFT

(11) **EP 3 821 210 B1**
(45) Veröffentlichungstag und Bekanntmachung des Hinweises auf die Patenterteilung: **09.08.2023**
(21) Anmeldenummer: 19735598.5
(22) Anmeldetag: 09.07.2019
(51) Int. Cl.: G01F 23/263

(54) **VORRICHTUNG UND VERFAHREN ZUR STEUERUNG EINER OPTISCHEN ERKENNUNGEINHEIT MIT HILFE EINER KAPAZITIVEN FÜLLSTANDSMESSUNG IN FLÜSSIGKEITSBEHÄLTERN**
DEVICE AND METHOD FOR CONTROLLING AN OPTICAL DETECTION UNIT BY MEANS OF A CAPACITIVE LEVEL MEASUREMENT IN LIQUID CONTAINERS
DISPOSITIF ET PROCÉDÉ DE COMMANDE D'UNE UNITÉ DE DÉTECTION OPTIQUE AU MOYEN D'UNE MESURE CAPACITIVE DE NIVEAU DANS DES RÉSERVOIRS DE LIQUIDES

(30) Priorität: 13.07.2018 EP 18183382
(43) Veröffentlichungstag der Anmeldung: 19.05.2021
(73) Patentinhaber: TECAN Trading AG, 8708 Männedorf (CH)
(72) Erfinder: OTT, Philipp, 8496 Steg (CH); FREI, Luca, 8645 Jona (CH); DIETERICH, Pascal, 8645 Jona (CH)
(74) Vertreter: Troesch Scheidegger Werner AG
(86) Internationale Anmeldenummer: PCT/EP2019/068383
(87) Internationale Veröffentlichungsnummer: WO 2020/011774

(56) Entgegenhaltungen:
- WO-A1-2006/021295
- DE-A1-102013 005 963
- DE-U1-202015 101 687
- US-B1- 7 509 856
- US-B2- 7 836 762

## Beschreibung

### TECHNISCHES GEBIET DER ERFINDUNG

Die vorliegende Erfindung ist dem technischen Gebiet der automatisierten Laborsysteme bzw. -anlagen, wie beispielsweise medizinische, chemische, pharmazeutische oder forensische Analysegeräte, zugeordnet und betrifft spezifisch Flüssigkeitsbearbeitungssysteme, im Speziellen eine Vorrichtung sowie ein entsprechendes Verfahren zur Steuerung einer optischen Erkennungseinheit mit Hilfe einer kapazitiven Füllstandsmessung in Flüssigkeitsbehältern.

### HINTERGRUND DER ERFINDUNG

Wenn in medizinischen, chemischen, analytischen, pharmazeutischen oder forensischen Labors grosse Mengen an Proben zu untersuchen sind, werden heute meist automatisierte Laborsysteme bzw. -anlagen eingesetzt, welche eine rasche und zuverlässige Verarbeitung jeder einzelnen Probe ermöglichen. Solche Laborsysteme sind oftmals als Flüssigkeitsbearbeitungssysteme auf die Handhabung von Flüssigkeitsvolumina ausgelegt. Dabei werden üblicherweise ein oder mehrere Roboter für den vollautomatischen Betrieb solcher Laborsysteme eingesetzt. Diese Roboter sind insbesondere auf den Umgang mit Flüssigkeitsbehältern spezialisiert und werden daher im Fachjargon als "Liquid Handling Roboter" bezeichnet. Die Proben werden meist in Probenbehältern, wie z.B. Probenröhrchen, von denen mehrere in einer Trägereinheit (im Fachjargon auch "Rack" genannt) angeordnet sind, angeliefert. Zudem werden oftmals Reagenzien, welche im Verlauf der Probenbearbeitung den Proben beigefügt werden, in Gefässen wie Fläschchen oder Trögen bereitgestellt.

Die Probenröhrchen und Reagenziengefässe weisen bei der Bereitstellung zur Verarbeitung durch das Flüssigkeitsbearbeitungssystem üblicherweise unterschiedlich Füllstände auf oder sind in manchen Fällen sogar leer. Um eine rasche und effiziente Bearbeitung zu gewährleisten sollte der Füllstand der einzelnen Flüssigkeitsbehälter bekannt sein bevor der Roboter seine Arbeit aufnimmt. Insbesondere sollten leere Behälter identifiziert werden können, und das System sollte z.B. auch in der Lage sein zu erkennen, ob sich überhaupt ein Probenröhrchen in einer bestimmten Aufnahme der Trägereinheit befindet, was für ein Typ Probenröhrchen sich in einer bestimmten Aufnahme der Trägereinheit befindet, oder um was für eine Art Trägereinheit es sich handelt. Zudem kann es auch hilfreich sein, bestimmte Merkmale an einer Trägereinheit zu erkennen.

Es besteht daher der Bedarf nach Mitteln, welche eine einfache (und folglich kostengünstige) sowie zuverlässige Bestimmung der oben genannten Merkmale in automatisierten Flüssigkeitsbearbeitungssystemen erlauben und damit eine effizientere Verarbeitung von grossen Mengen an Proben ermöglichen.

Oftmals wird eine optische Erkennungseinheit zum Erkennen von Kennzeichen an und/oder Merkmalen von Laborobjekten (wie z.B. Trägereinheiten, Flüssigkeitsbehältern, Trögen, Probenröhrchen, etc.) und/oder von darin befindlichen Proben(-Flüssigkeiten) eingesetzt. Um die Kennzeichen und Merkmalen möglichst einfach, rasch und zuverlässig erkennen zu können, und insbesondere um die Datenmenge, welche dafür verarbeitet werden muss, möglichst gering zu halten, besteht der Bedarf nach geeigneten Mitteln zur Steuerung der optischen Erkennungseinheit. Das Dokument mit der internationalen Veröffentlichungsnummer WO 2006/021295 A1 offenbart eine Identifizierung eines Reservoirs in Kombination mit einer Messung des Reservoirinhalts durch kapazitive Elektroden.

### ZUSAMMENFASSUNG DER ERFINDUNG

Es ist eine Aufgabe der vorliegenden Erfindung eine Vorrichtung zur Steuerung einer optischen Erkennungseinheit sowie zur Füllstandsmessung in Flüssigkeitsbehältern bereitzustellen, mit deren Hilfe eine präzise Erfassung des Füllstands der einzelnen Flüssigkeitsbehälter bereits bei der Bereitstellung für die nachfolgende Verarbeitung durch den Liquid Handling Roboter ermöglicht sowie eine einfache, rasche und zuverlässige Erkennung von Kennzeichen an und/oder Merkmalen von Laborobjekten und/oder von darin befindlichen Proben gewährleistet wird. Diese Aufgabe wird erfindungsgemäss durch die in Anspruch 1 festgelegte Messvorrichtung erfüllt.

Es ist zudem eine Aufgabe der vorliegenden Erfindung ein entsprechendes Verfahren zur Steuerung einer optischen Erkennungseinheit sowie zur Füllstandsmessung bereitzustellen, welches eine präzise Erfassung des Füllstands der einzelnen Flüssigkeitsbehälter bereits bei der Bereitstellung für die nachfolgende Verarbeitung durch den Liquid Handling Roboter ermöglicht sowie eine einfache, rasche und zuverlässige Erkennung von Kennzeichen an und/oder Merkmalen von Laborobjekten und/oder von darin befindlichen Proben gewährleistet. Diese Aufgabe wird erfindungsgemäss durch das in Anspruch 12 vorgeschlagene Messverfahren gelöst.

Spezifische erfindungsgemässe Ausführungsvarianten werden in den abhängigen Ansprüchen angegeben.

Eine erfindungsgemässe Vorrichtung zur Steuerung einer optischen Erkennungseinheit mit Hilfe einer kapazitiven Füllstandsmessung in Flüssigkeitsbehältern, insbesondere Behälter (wie Tröge oder Fläschchen) für Reagenzien oder Probenröhrchen, umfasst:
- die optische Erkennungseinheit mit einem optischen Sensorelement;
- ein Sensor mit einer Messelektrode;
- eine leitende Bodenplatte geeignet zum Anordnen von mindestens einem Flüssigkeitsbehälter oder einer Trägereinheit mit mindestens einer Aufnahme zum Aufnehmen eines Flüssigkeitsbehälters, insbesondere eines Probenröhrchens;
- eine Sensorelektronikeinheit, welche mit der Messelektrode und der Bodenplatte verbunden ist und zum Bestimmen einer Kapazität (bzw. Impedanz) zwischen der Messelektrode und der Bodenplatte ausgeführt ist;
- eine Auswerteeinheit; und
- eine Steuereinheit zum Steuern der optischen Erkennungseinheit,
wobei die Messelektrode im Wesentlichen senkrecht zur Bodenplatte angeordnet ist, insbesondere vertikal zur horizontal angeordneten Bodenplatte angeordnet ist, und wobei die Auswerteeinheit dazu ausgeführt ist, basierend auf der Kapazität mindestens eines aus folgender Liste zu erkennen:
- einen Füllstand des Flüssigkeitsbehälters, insbesondere des Probenröhrchens, insbesondere ob der Flüssigkeitsbehälter, insbesondere das Probenröhrchen, leer ist und/oder einen vorgegebenen Füllstand über- oder unter schreitet;
- ob sich ein Flüssigkeitsbehälter, insbesondere ein Probenröhrchen, in der mindestens einen Aufnahme befindet;
- unterschiedliche Trägereinheiten, wie z.B. Trägereinheiten für unterschiedlich grosse Flüssigkeitsbehälter, insbesondere Probenröhrchen;
- unterschiedliche Merkmale an einer Trägereinheit, wie z.B. einzelne Aufnahmen, insbesondere Unterteilungen zwischen den Aufnahmen,
und wobei die Steuereinheit mit der Sensorelektronikeinheit bzw. der Auswerteeinheit verbunden ist, und von der Sensorelektronikeinheit bzw. der Auswerteeinheit ein Steuersignal in Abhängigkeit von der Kapazität erzeugbar ist, und die optische Erkennungseinheit in Abhängigkeit des Steuersignals steuerbar ist, insbesondere ein Prozess zum Erkennen von Kennzeichen an und/oder Merkmalen von dem Flüssigkeitsbehälter, insbesondere einem Probenröhrchen, und/oder von einem/einer darin befindlichen Reagenz oder Probe auslösbar ist.

In einer Ausführungsvariante der Vorrichtung ist die Messelektrode auf einer Vorderseite eines Sensorträgers oberhalb einer Guardelektrode angeordnet, wobei sich die Guardelektrode insbesondere zwischen der Messelektrode und der Bodenplatte befindet.

In einer weiteren Ausführungsvariante der Vorrichtung ist die Messelektrode auf einer Vorderseite eines Sensorträgers zwischen einer ersten und einer zweiten Guardelektrode angeordnet.

In einer weiteren Ausführungsvariante der Vorrichtung ist auf einer Hinterseite oder einer Zwischenschicht des Sensorträgers eine dritte Guardelektrode angeordnet, wobei die dritte Guardelektrode (von der Messelektrode sowie der ersten und zweiten Guardelektrode elektrisch isoliert ist und) mindestens die Messelektrode (von hinten) überdeckt, insbesondere die Messelektrode sowie die erste und zweite Guardelektrode überdeckt.

In einer weiteren Ausführungsvariante der Vorrichtung sind die Messelektrode sowie die erste und zweite Guardelektrode zwischen einer ersten und einer zweiten Masseelektrode angeordnet, wobei die erste und zweite Masseelektrode ihrerseits zwischen einer vierten und fünften Guardelektrode angeordnet sind, wobei die erste und zweite Masseelektrode elektrisch mit der Bodenplatte verbunden sind.

In einer weiteren Ausführungsvariante der Vorrichtung sind die Messelektrode, die allfälligen Guardelektroden und die allfälligen Masseelektroden streifenförmig ausgeführt, und sind beim Betrieb der Vorrichtung vertikal und insbesondere parallel zu einer Längsachse des Flüssigkeitsbehälters, insbesondere des Probenröhrchens, ausgerichtet.

In einer weiteren Ausführungsvariante der Vorrichtung weist die Messelektrode eine Breite im Bereich von 80 % bis 100 % des Durchmessers des Flüssigkeitsbehälters, insbesondere des Probenröhrchens, auf, und die erste und zweite Guardelektrode weisen insbesondere je eine Breite von über 100 % des Durchmessers des Flüssigkeitsbehälters, insbesondere des Probenröhrchens, auf. Die Probenröhrchen sind typischerweise zwischen 8 und 16 mm breit.

In einer weiteren Ausführungsvariante der Vorrichtung umfasst die Sensorelektronikeinheit ein Signalgenerator, mit welchem ein Signal zum Anregen der Messelektrode erzeugbar ist, wobei das Signal insbesondere ein sinusförmiges Signal mit einer Frequenz im Bereich von 20 kHz bis 400 kHz oder ein treppenstufenförmiges Signal mit einer Frequenz im Bereich von 20 kHz bis 50 kHz ist, wobei die Frequenz insbesondere unterschiedlich einstellbar ist. Es sei angemerkt, dass das Signal nicht nur Signalanteile (genau) bei der erwähnten Frequenz aufweisen muss, sondern nebst dieser Frequenz zusätzliche Signalanteile bei anderen Frequenzen in einem Frequenzbereich um die erwähnte Frequenz herum umfassen kann. Für eine Schaumdetektion oder zur Unterscheidung zwischen verschiedenen Flüssigkeiten, insbesondere Reagenzien, mit unterschiedlichen Impedanzspektren (wie dies beides unten angegeben wird) werden auch Signale mit einer Frequenz von mehreren Megahertz, z.B. von 12 MHz, verwendet.

In einer weiteren Ausführungsvariante der Vorrichtung wird das Signal zum Anregen der Messelektrode ebenfalls zum Anregen der Guardelektroden verwendet, wobei das Signal zum Anregen der Guardelektroden niederohmig ist, und insbesondere mit einem Pufferverstärker mit Spannungsverstärkung 1 aus dem Signal zum Anregen der Messelektrode erzeugt wird.

In einer weiteren Ausführungsvariante der Vorrichtung ist der Sensorträger als Leiterplatte ausgeführt, insbesondere als mehrlagige Leiterplatte.

In einer weiteren Ausführungsvariante der Vorrichtung ist die Sensorelektronikeinheit auf derselben Leiterplatte untergebracht wie der Sensor, wobei die Leiterplatte mindesten zwei Zwischenschichten zwischen der Vorderseite und der Hinterseite aufweist, wobei sich die Messelektrode sowie die allfällige erste und zweite Guardelektrode sowie die allfällige erste und zweite Masseelektrode sowie die allfällige vierte und fünfte Guardelektrode auf der Vorderseite der Leiterplatte befinden, die allfällige dritte Guardelektrode sich auf einer ersten Zwischenschicht hinter der Vorderseite befindet, eine Massefläche als Abschirmung sich auf einer zweiten Zwischenschicht hinter der ersten Zwischenschicht befindet, wobei die Abschirmung mit der allfälligen ersten und zweiten Masseelektrode elektrisch verbunden ist, und Leiterbahnen für eine Signalführung der Sensorelektronikeinheit sich auf der Hinterseite und allenfalls einer oder mehrerer weiteren Zwischenschichten zwischen der Hinterseite und der Massenfläche befinden.

Gemäss einem weiteren Aspekt der vorliegenden Erfindung umfasst ein Verfahren zur Steuerung einer optischen Erkennungseinheit mit Hilfe einer kapazitiven Füllstandsmessung in Flüssigkeitsbehältern, insbesondere Behälter für Reagenzien oder Probenröhrchen, die Schritte:
- Bereitstellen einer leitenden Bodenplatte, welche horizontal angeordnet ist, und eines Sensors mit einer Messelektrode, welche vertikal angeordnet ist, und einer Sensorelektronikeinheit, welche mit der Messelektrode und der Bodenplatte verbunden ist;
- Anordnen eines Flüssigkeitsbehälters oder einer Trägereinheit mit mindestens einer Aufnahme zum Aufnehmen eines Flüssigkeitsbehälters, insbesondere eines Probenröhrchens, auf der Bodenplatte neben der Messelektrode;
- Anregen der Messelektrode mit einem Signal;
- Bestimmen eines Messsignals in Abhängigkeit einer Kapazität (bzw. Impedanz) zwischen der Messelektrode und der Bodenplatte; und
- Bestimmen oder Erkennen basierend auf dem Messsignal von mindestens einem aus folgender Liste:
   ∘ einen Füllstand des Flüssigkeitsbehälters, insbesondere des Probenröhrchens, insbesondere ob der Flüssigkeitsbehälter, insbesondere das Probenröhrchen, leer ist und/oder einen vorgegebenen Füllstand über- oder unter schreitet;
   ∘ ob sich ein Flüssigkeitsbehälter, insbesondere ein Probenröhrchen, in einer bestimmten Aufnahme der Trägereinheit befindet;
   ∘ was für ein Typ Probenröhrchen sich in einer bestimmten Aufnahme der Trägereinheit befindet;
   ∘ unterschiedliche Merkmale an einer Trägereinheit, wie z.B. einzelne Aufnahmen, insbesondere Unterteilungen zwischen den Aufnahmen;
   ∘ um was für eine Art Trägereinheit es sich handelt, wie z.B. eine Trägereinheit geeignet zum Aufnehmen von Probenröhrchen einer bestimmten Grösse bzw. maximalen Füllmenge,
- Steuern der optischen Erkennungseinheit (mit einem optischen Sensorelement) basierend auf dem Messsignal, insbesondere Auslösen eines Prozesses zum Erkennen von Kennzeichen an und/oder Merkmalen von dem Flüssigkeitsbehälter, insbesondere einem Probenröhrchen, und/oder von einem/einer darin befindlichen Reagenz oder Probe.

In einer Ausführungsvariante umfasst das Verfahren weiter den Schritt:
- Bewegen einer Trägereinheit mit einer Vielzahl von Aufnahmen zum Aufnehmen von Probenröhrchen in horizontaler Richtung an der Messelektrode vorbei,
wobei das Bestimmen des Messsignals während dem Bewegen der Trägereinheit an der Messelektrode vorbei geschieht.

In einer weiteren Ausführungsvariante des Verfahrens, welche es erlaubt ein Vorhandensein von Schaum im Flüssigkeitsbehälter zu bestimmen, umfasst das Verfahren weiter die Schritte:
- Erzeugen des Signals zum Anregen der Messelektrode mit einer ersten Frequenz, insbesondere in einem Bereich von 1 kHz bis 1 MHz, noch insbesondere in einem Bereich von 300 kHz bis 500 kHz;
- Erzeugen des Signals zum Anregen der Messelektrode mit einer zweiten Frequenz, insbesondere in einem Bereich von 1 MHz bis 50 MHz, noch insbesondere in einem Bereich von 10 MHz bis 15 MHz, wobei die erste und zweite Frequenz unterschiedlich sind; und
- Ausgeben einer Kennung, die ein Vorhandensein von Schaum im Flüssigkeitsbehälter, insbesondere in einem Probenröhren, signalisiert, falls eine Differenz zwischen dem Messsignal beim Anregen der Messelektrode mit der ersten Frequenz und dem Messsignal beim Anregen der Messelektrode mit der zweiten Frequenz einen vorgegebenen Schwellwert übersteigt.

Dabei können die Signale zum Anregen der Messelektrode mit der ersten und der zweiten Frequenz zeitgleich erzeugt und an die Messelektrode angelegt werden.

In einer weiteren Ausführungsvariante des Verfahrens, welche es erlaubt ein Vorhandensein einer bestimmten Flüssigkeit, insbesondere ein bestimmtes Reagenz, im Flüssigkeitsbehälter zu bestimmen, umfasst das Verfahren weiter die Schritte:
- Erzeugen des Signals zum Anregen der Messelektrode mit einer ersten Frequenz, insbesondere in einem Bereich von 1 kHz bis 1 MHz;
- Erzeugen des Signals zum Anregen der Messelektrode mit einer zweiten Frequenz, insbesondere in einem Bereich von 1 MHz bis 50 MHz, wobei die erste und zweite Frequenz unterschiedlich sind; und
- Ausgeben einer Kennung, die ein Vorhandensein einer bestimmten Flüssigkeit, insbesondere ein bestimmtes Reagenz, im Flüssigkeitsbehälter signalisiert, falls eine Differenz zwischen dem Messsignal beim Anregen der Messelektrode mit der ersten Frequenz und dem Messsignal beim Anregen der Messelektrode mit der zweiten Frequenz einen vorgegebenen Schwellwert übersteigt.

Dabei können die Signale zum Anregen der Messelektrode mit der ersten und der zweiten Frequenz zeitgleich erzeugt und an die Messelektrode angelegt werden.

Es sei angemerkt, dass Kombinationen der oben genannten Ausführungsvarianten möglich sind, die wiederum zu spezifischeren Ausführungsvarianten der vorliegenden Erfindung führen.

### KURZE BESCHREIBUNG DER ZEICHNUNGEN

Nichtlimitierende Ausführungsbeispiele der vorliegenden Erfindung werden nachstehend anhand von Figuren noch näher erläutert. Es zeigen:
- Fig. 1: schematisch in einer Seitenansicht eine Ausführungsvariante einer Vorrichtung zur kapazitiven Füllstandsmessung;
- Fig. 2: a) schematisch in einer Seitenansicht eine Trägereinheit mit mehreren Probenröhrchen,
b) schematisch in einer Ansicht von oben eine Ausführungsvariante einer Vorrichtung zur kapazitiven Füllstandsmessung in den Probenröhrchen gemäss Fig. 2 a),
c) schematische Darstellung inklusive Andeutung der elektrischen Ersatzschaltung der Ausführungsvariante gemäss Fig. 2 a) & b);
- Fig. 3: a) eine weitere Ausführungsvariante eines Sensors,
b) Ansicht der Vorderseite (links) sowie der Zwischenschicht und der Massefläche (rechts) des Sensors gemäss Fig. 3 a),
c) Seitenprofil des Sensors gemäss Fig. 3 a) & b) mit der Vorderseite, der Zwischenschicht und dahinter der Schicht mit der Massefläche;
- Fig. 4: gemessener Verlauf der Kapazität über die Zeit beim Vorbeischieben einer Trägereinheit mit Probenröhrchen am Sensor gemäss Fig. 3; und
- Fig. 5: schematisch eine Ausführungsvariante gemäß der beanspruchten Erfindung einer Vorrichtung zur Füllstandsmessung, welche zusätzlich eine optische Erkennungseinheit aufweist, die abhängig von der gemessenen Kapazität gesteuert wird.

In den Figuren stehen gleiche Bezugszeichen für gleiche Elemente.

### DETAILLIERTE BESCHREIBUNG DER ERFINDUNG

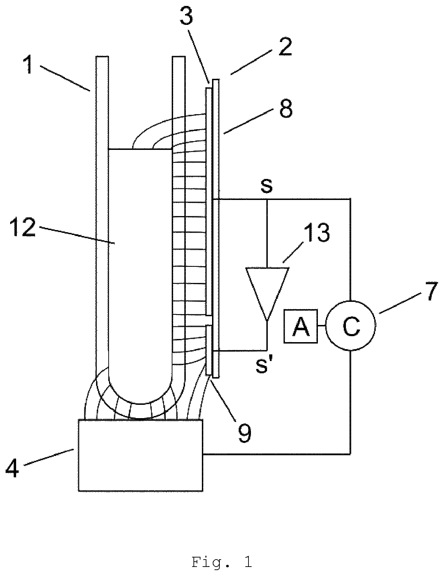

Fig. 1 zeigt schematisch in einer Seitenansicht eine beispielhafte Ausführungsvariante einer Anordnung zur kapazitiven Füllstandsmessung. Dazu wird ein Flüssigkeitsbehälter, hier ein Probenröhrchen 1 über einer leitenden, horizontalen Bodenplatte (bzw. Arbeitsfläche) 4 und neben einem Sensor 2 mit einer Messelektrode 3 angeordnet. Die Messelektrode 3 und die Bodenplatte 4 sind mit einer Sensorelektronikeinheit 7 verbunden, welche zum Bestimmen der Kapazität zwischen der Messelektrode 3 und der Bodenplatte 4 ausgeführt ist. Typischerweise ist die Bodenplatte 4 geerdet bzw. liegt auf einem Referenzpotential. Um die Kapazität zu messen wird die Messelektrode 3 mit einem Signal s, welches von einem Signalgenerator in der Sensorelektronikeinheit 7 erzeugt wird, angeregt. Aufgrund des Signals s bildet sich ein elektrisches Feld zwischen der Messelektrode 3 und der Bodenplatte 4, wobei die Feldlinien durch die Flüssigkeit 12 hindurchgeleitet werden. Je nach der Menge der Flüssigkeit 12 im Probenröhrchen 1, also je nach Füllstand, verändert sich die gemessene Kapazität.

Optional kann der Sensor 2 nebst der Messelektrode 3 zusätzlich eine Guardelektrode 9 umfassen, welche zusammen mit der Messelektrode 3 auf einem Sensorträger 8 angeordnet ist. Die Guardelektrode 9 wird mit einem niederohmigen Signal s' angeregt, welches durch Anlegen des Signals s an einen Pufferverstärker 13 mit Spannungsverstärkung 1 erzeugt werden kann. Mittels der Guardelektrode 9 kann das elektrische Feld in einer gewünschten Weise fokussiert werden, wodurch sichergestellt wird, dass die Feldlinien von der Messelektrode 3 durch die Flüssigkeit 12 geführt und nicht direkt in die Bodenplatte 4 geleitet werden, was die Genauigkeit der Füllstandsmessung erhöht.

Der in Fig. 1 dargestellte Sensor 2 eignet sich gut, wenn jeweils nur ein einzelner Flüssigkeitsbehälter, wie z.B. ein Trog oder Fläschchen mit einem Reagenz oder Reinigungsmittel, vor die beschriebene Elektrodenanordnung gestellt wird, um dessen Füllstand zu ermitteln. Werden hingegen mehrere, nahebeieinander angeordnete Flüssigkeitsbehälter, wie z.B. eine Vielzahl von Probenröhrchen 1 in einer Trägereinheit (Rack) 5, zusammen am Sensor 2 vorbeigeführt, so wird ein Teil der Feldlinien von der Messelektrode 3 durch die Flüssigkeit 12' der benachbarten Probenröhrchen 1' geführt, wodurch die Messung des Füllstands des gewünschten Probenröhrchen 1 durch den Füllstand der benachbarten Probenröhrchen 1' verfälscht werden kann.

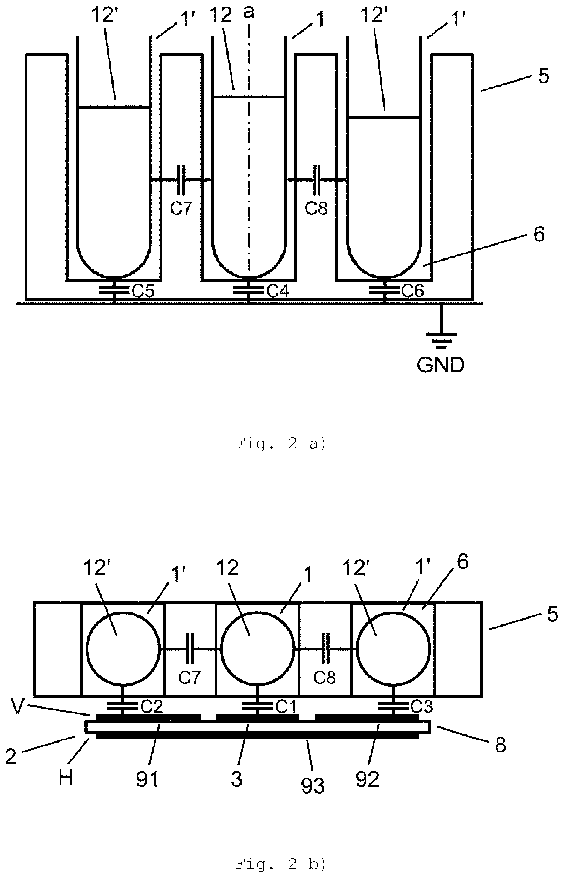

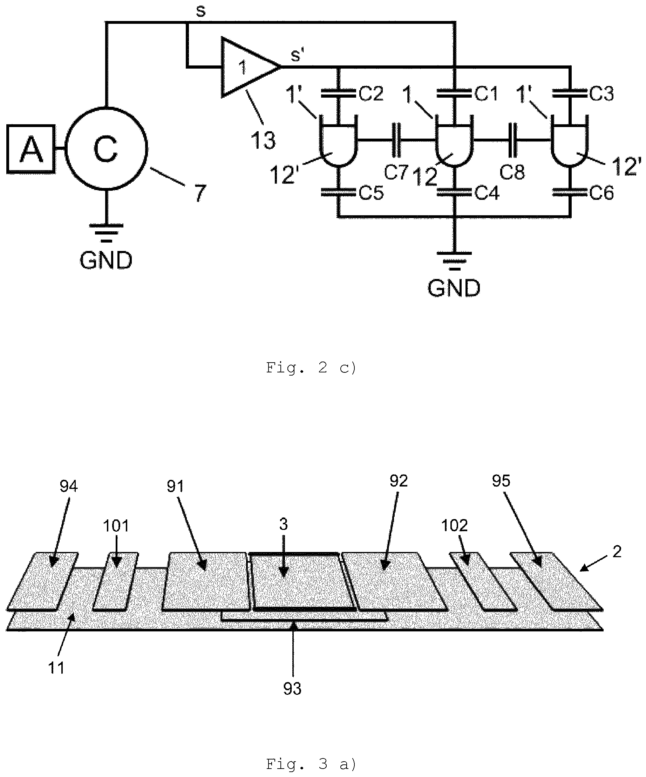

In Fig. 2 wird eine Ausführungsvariante eines Sensors 2 gezeigt, welcher das oben beschriebene Problem gelöst, indem das von benachbarten Probenröhrchen 1' verursachte "Übersprechen" stark vermindert wird.

Fig. 2 a) zeigt schematisch in einer Seitenansicht eine Trägereinheit 5 mit mehreren Probenröhrchen 1, welche alle Flüssigkeit 12, 12' enthalten. Der Sensor 2 ist in dieser Darstellung nicht sichtbar, steht jedoch vor den drei abgebildeten Probenröhrchen 1, 1' deren Längsachse a senkrecht zur horizontalen Bodenplatte 4 steht. In Fig. 2 b) wird diese Anordnung von oben gezeigt, hier mit dem Sensor 2. Wie man nun sehen kann, liegt bei diesem Sensor 2 die Messelektrode 3 zwischen zwei Guardelektroden 91, 92, welche links und rechts der Messelektrode 3 angeordnet sind. Die Messelektrode 3 sowie die beiden Guardelektroden 91, 92 sind auf der Vorderseite V einer Leiterplatte, die als Sensorträger 8 dient, angeordnet. Auf der Hinterseite H des Sensorträgers 8 ist eine weitere Guardelektrode 93 angeordnet, welche von hinten sowohl die Messelektrode 3 als auch die beiden vorderen Guardelektroden 91, 92 überdeckt. Durch diese Elektrodenanordnung entsteht ein elektrisches Feld, welches einerseits die Messelektrode 3 mit der Flüssigkeit 12 im davor stehenden Probenröhrchen 1 koppelt (angedeutet durch die Kapazität C1) und die beiden seitlichen Guardelektroden 91, 92 mit der Flüssigkeit 12' in den vor ihnen stehenden Probenröhrchen 1' koppelt (angedeutet durch die Kapazitäten C2 & C3) und andererseits die Flüssigkeit 12, 12' in den drei Probenröhrchen 1, 1' mit der geerdeten Bodenplatte 4 koppelt (angedeutet durch die Kapazitäten C4, C5 & C6). Trotz der Guardelektroden 91, 92 wird immer noch ein kleiner Teil des elektrischen Feldes von der Flüssigkeit 12' in den beiden seitlichen Probenröhrchen 1' in die Flüssigkeit 12 im mittleren Probenröhrchen 1, dessen Füllstand zu messen ist, eingestreut (angedeutet durch die Kapazitäten C7 & C8). Die Kapazitäten C7 & C8 sind allerdings vergleichsweise klein gegenüber der Kapazität C1+C4.

Fig. 2 c) zeigt eine schematische Darstellung inklusive Andeutung der elektrischen Ersatzschaltung der Ausführungsvariante gemäss Fig. 2 a) & b) mit der Sensorelektronikeinheit 7, welche einen Signalgenerator enthält, der das Signal s zum Anregen der Messelektrode 3 liefert, sowie dem Pufferverstärker 13 mit Verstärkung 1, welcher dieses Signal s als niederohmiges Signal s' den beiden Guardelektroden 91, 92 zuführt.

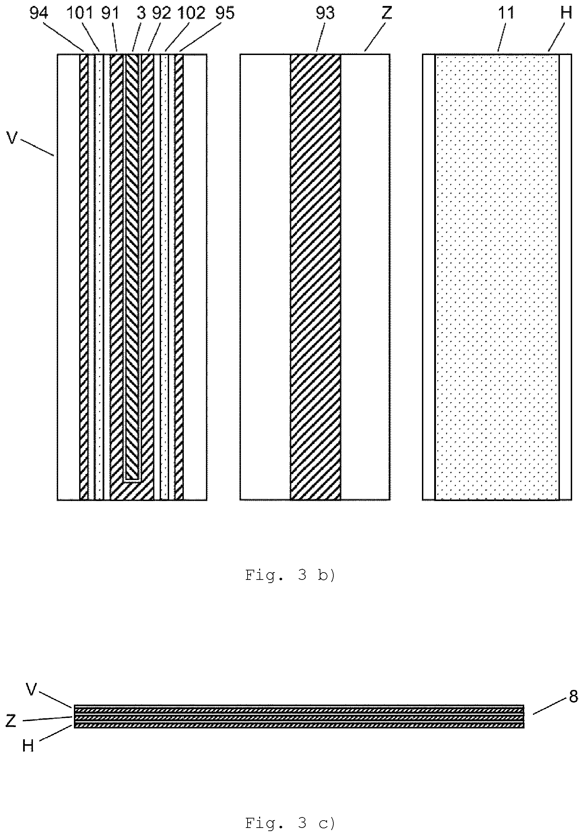

Um das "Übersprechen" bzw. die Verkopplung der Probenröhrchen 1, 1' (bzw. der darin befindlichen Flüssigkeiten 12, 12') weiter zu reduzieren, wird die in Fig. 3 illustrierte Ausführungsvariante vorgeschlagen.

In der Fig. 3 a) wird ein streifenförmiger Ausschnitt des Sensors 2 in einer perspektivischen Darstellung gezeigt. Bei dieser Ausführungsvariante sind zusätzliche auf der Vorderseite V des Sensorträgers 8 je links und rechts der Messelektrode 3 und der beiden Guardelektroden 91, 92 eine Masseelektrode 101, 102 und eine weitere Guardelektrode 94, 95 angeordnet. Durch die gezeigte Anordnung der beiden seitlichen Masseelektrode 101, 102 werden im elektrischen Feld zwischen den drei Proberöhrchen 1, 1' Nullstellen erzeugt.

In der Abbildung von Fig. 3 b) sind in einer Ansicht von vorne auf der linken Seite die vollständige Vorderseite V des Sensorträgers 8 dargestellt mit der linken, äusseren Guardelektrode 94, der linken Masseelektrode 101, der linken, inneren Guardelektrode 91, der Messelektrode 3, der rechten, inneren Guardelektrode 92, der rechten Masseelektrode 102 sowie der rechten, äusseren Guardelektrode 95, welche allesamt streifenförmig ausgeführt sind, in der Mitte die Zwischenschicht Z mit der Guardelektrode 93, und auf der rechten Seite die Hinterseite H mit der Massefläche 11. Die Länge der Elektrodenstreifen entspricht in etwa der Höhe der Probenröhrchen 1. Als Detail sei noch zu beachten, das sich am unteren Ende der Messelektrode 3 noch ein Stück Guardelektrode 9 befindet, wie dies auch in Fig. 1 gezeigt wird, um sicherzustellen, dass die Feldlinien des elektrischen Feldes von der Messelektrode 3 via die Flüssigkeit 12 im Probenröhrchen 1 zur Bodenplatte 4 gelangen und nicht direkt von der Messelektrode 3 zur Bodenplatte 4 verlaufen und die Flüssigkeit 12 im Probenröhrchen 1 umgehen, wodurch die Füllstandsmessung verfälscht und somit ungenau würde.

Fig. 3 c) zeigt noch ein (um 90 Grad in die Horizontale gedrehtes) Seitenprofil des mehrlagigen Sensorträgers 2, welcher z.B. als mehrlagige Leiterplatte ausgeführt ist, mit der Vorderseite V mit den sieben streifenförmigen Elektroden 94, 101, 91, 3, 92, 102 & 95, der Zwischenschicht Z mit der breiten streifenförmigen Guardelektrode 93 und der Hinterseite H mit der noch breiteren Massefläche 11, welche alle vor ihr liegenden Elektrodenstreifen von hinten überdeckt.

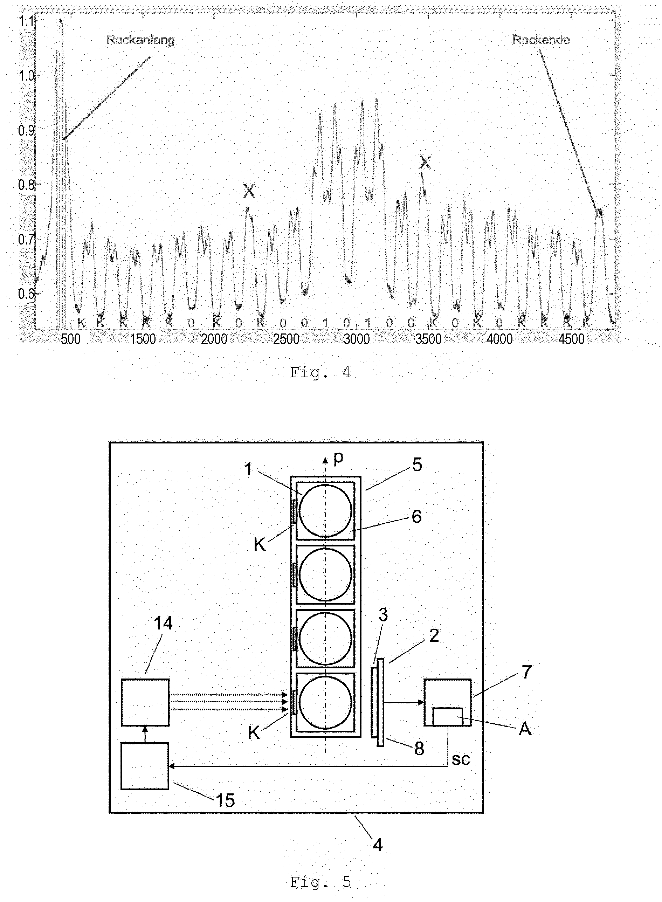

In Fig. 4 ist der gemessene Verlauf der Kapazität über die Zeit beim Vorbeischieben einer Trägereinheit 5 mit 24 Aufnahmen 6 für Probenröhrchen 1 am Sensor 2 gemäss Fig. 3 dargestellt. In der Grafik bedeuten die Beschriftungen "K" = kein Probenröhrchen in der Aufnahme, "0" = keine Flüssigkeit im Probenröhrchen (leer), "1" = Probenröhrchen vollgefüllt (mit 6 ml Flüssigkeit 12). Die gemessene Kurve weist jeweils Spitzen auf bei den Begrenzungen zwischen den Aufnahmen 6, sowie insbesondere an denjenigen Stellen, wo Teile der Trägereinheit 5 zusammengefügt sind, da sich dort jeweils eine etwas breitere Begrenzung befindet (s. mit "X" markierte Stellen in Fig. 4). Der Füllstand der Probenröhrchen 1 geht aus der Höhe der Vertiefungen zwischen diesen Spitzen hervor. Es ist auch gut erkennbar, wenn sich kein Probenröhrchen 1 in einer Aufnahme 6 befindet (s. mit "K" markierte Stellen in Fig. 4). Das Übersprechen ist sehr gering und beträgt maximal 10 % der Grundkapazität C1+C4. Dabei ist das Ausmass des Übersprechens vom Füllstand der beiden benachbarten Probenröhrchen 1' abhängig. Ist der Füllstand der beiden benachbarten Probenröhrchen 1' (ungefähr) bekannt, so kann das Übersprechen berechnet/abgeschätzt und kompensiert werden.

Zum Schluss zeigt Fig. 5 schematisch eine Ausführungsvariante gemäß der beanspruchten Erfindung einer Vorrichtung zur Füllstandsmessung, welche zusätzlich eine optische Erkennungseinheit 14 aufweist, die abhängig von der gemessenen Kapazität gesteuert wird. Die Probenröhrchen 1 weisen meist ein Kennzeichen K, wie beispielsweise ein ein-(1D) oder zweidimensionaler (2D) Barcode, der auf einer auf dem Probenröhrchen 1 angebrachten Etikette aufgedruckt ist, auf, sodass z.B. Informationen betreffend die Herkunft der Probe im Probenröhrchen 1 dieser eindeutig zugeordnet werden können. Vor der Verarbeitung der Proben muss dann jeweils das Kennzeichen K auf jedem Probenröhrchen 1 mittels der optischen Erkennungseinheit 14 gelesen werden. Dazu muss die optischen Erkennungseinheit 14 wissen wann ein Probenröhrchen 1 vor ihr angeordnet ist, um das Kennzeichen K zu Lesen. Diese Information kann z.B. von einer Auswerteeinheit A in der Sensorelektronikeinheit 7 geliefert werden, sobald diese feststellt, dass sich ein Probenröhrchen 1 vor dem Sensor 2 befindet. Wie man der Fig. 5 entnehmen kann, wird die Trägereinheit 5 mit Probenröhrchen 1 in den Aufnahmen 6 am Sensor 2 entlang des Pfades p vorbeibewegt. Sobald die Auswerteeinheit A ein bestimmtes Merkmal an der Trägereinheit 5 erkannt oder einen vorgebaren Mindestfüllstand gemessen hat wird ein Steuersignal sc erzeugt, das der Steuereinheit 15, welche die optische Erkennungseinheit 14 steuert, signalisiert, dass ein Kennzeichen K gelesen werden soll.

### LISTE DER BEZUGSZEICHEN

- 1, 1': Flüssigkeitsbehälter, Trog, Probenröhrchen
- 2: Sensor
- 3: Messelektrode
- 4: Bodenplatte
- 5: Trägereinheit
- 6: Aufnahme
- 7: Sensorelektronikeinheit
- 8: Sensorträger (mit Vorderseite V, Hinterseite H, Zwischenschicht Z)
- 9: Guardelektrode
- 91: erste Guardelektrode
- 92: zweite Guardelektrode
- 93: dritte Guardelektrode
- 94: vierte Guardelektrode
- 95: fünfte Guardelektrode
- 101: erste Masseelektrode
- 102: zweite Masseelektrode
- 11: Massefläche
- 12, 12': Flüssigkeit
- 13: Pufferverstärker
- 14: optische Erkennungseinheit
- 15: Steuereinheit
- A: Auswerteeinheit
- a: Längsachse eines Probenröhrchens
- C1...C8: (Teil-) Kapazität
- GND: Ground, Erdpotential
- H: Hinterseite des Sensorträgers
- K: Kennzeichen
- p: Einschubpfad der Trägereinheit
- s: Signal zum Anregen der Messelektrode
- s': Signal zum Anregen der Guardelektroden
- sc: Steuersignal
- V: Vorderseite des Sensorträgers
- Z: Zwischenschicht des Sensorträgers

## Patentansprüche

1. Vorrichtung zur Steuerung einer optischen Erkennungseinheit mit Hilfe einer kapazitiven Füllstandsmessung in Flüssigkeitsbehältern (1), insbesondere Behälter für Reagenzien oder Probenröhrchen, umfassend:
- die optische Erkennungseinheit (14) mit einem optischen Sensorelement;
- ein Sensor (2) mit einer Messelektrode (3);
- eine leitende Bodenplatte (4) geeignet zum Anordnen von mindestens einem Flüssigkeitsbehälter (1) oder einer Trägereinheit (5) mit mindestens einer Aufnahme (6) zum Aufnehmen eines Flüssigkeitsbehälters (1), insbesondere eines Probenröhrchens;
- eine Sensorelektronikeinheit (7), welche mit der Messelektrode (3) und der Bodenplatte (4) verbunden ist und zum Bestimmen einer Kapazität zwischen der Messelektrode (3) und der Bodenplatte (4) ausgeführt ist;
- eine Auswerteeinheit (A); und
- eine Steuereinheit (15) zum Steuern der optischen Erkennungseinheit (14),
wobei die Messelektrode (3) im Wesentlichen senkrecht zur Bodenplatte (4) angeordnet ist, insbesondere vertikal zur horizontal angeordneten Bodenplatte (4) angeordnet ist, und wobei die Auswerteeinheit (A) dazu ausgeführt ist, basierend auf der Kapazität mindestens eines aus folgender Liste zu erkennen:
- einen Füllstand des Flüssigkeitsbehälters (1), insbesondere des Probenröhrchens, insbesondere ob der Flüssigkeitsbehälter (1), insbesondere das Probenröhrchen, leer ist und/oder einen vorgegebenen Füllstand über- oder unter schreitet;
- ob sich ein Flüssigkeitsbehälter (1), insbesondere ein Probenröhrchen, in der mindestens einen Aufnahme (6) befindet;
- unterschiedliche Trägereinheiten (5), wie z.B. Trägereinheiten (5) für unterschiedlich grosse Flüssigkeitsbehälter (1), insbesondere Probenröhrchen;
- unterschiedliche Merkmale an einer Trägereinheit (5), wie z.B. einzelne Aufnahmen (6), insbesondere Unterteilungen zwischen den Aufnahmen (6),
und wobei die Steuereinheit (15) mit der Sensorelektronikeinheit (7) bzw. der Auswerteeinheit (A) verbunden ist, und von der Sensorelektronikeinheit (7) bzw. der Auswerteeinheit (A) ein Steuersignal (sc) in Abhängigkeit von der Kapazität erzeugbar ist, und die optische Erkennungseinheit (14) in Abhängigkeit des Steuersignals (sc) steuerbar ist, insbesondere ein Prozess zum Erkennen von Kennzeichen (K) an und/oder Merkmalen von dem Flüssigkeitsbehälter (1), insbesondere einem Probenröhrchen, und/oder von einem/einer darin befindlichen Reagenz oder Probe auslösbar ist.

2. Vorrichtung nach Anspruch 1, wobei die Messelektrode (3) auf einer Vorderseite (V) eines Sensorträgers (8) oberhalb einer Guardelektrode (9) angeordnet ist, wobei sich die Guardelektrode (9) insbesondere zwischen der Messelektrode (3) und der Bodenplatte (4) befindet.

3. Vorrichtung nach Anspruch 1, wobei die Messelektrode (3) auf einer Vorderseite (V) eines Sensorträgers (8) zwischen einer ersten und einer zweiten Guardelektrode (91, 92) angeordnet ist.

4. Vorrichtung nach Anspruch 3, wobei auf einer Hinterseite (H) oder einer Zwischenschicht (Z) des Sensorträgers (8) eine dritte Guardelektrode (93) angeordnet ist, wobei die dritte Guardelektrode (93) mindestens die Messelektrode (8) überdeckt, insbesondere die Messelektrode (3) sowie die erste und zweite Guardelektrode (91, 92) überdeckt.

5. Vorrichtung nach Anspruch 4, wobei die Messelektrode (3) sowie die erste und zweite Guardelektrode (91, 92) zwischen einer ersten und einer zweiten Masseelektrode (101, 102) angeordnet sind, und wobei die erste und zweite Masseelektrode (101, 102) ihrerseits zwischen einer vierten und fünften Guardelektrode (94, 95) angeordnet sind, wobei die erste und zweite Masseelektrode (101, 102) elektrisch mit der Bodenplatte (4) verbunden sind.

6. Vorrichtung nach einem der Ansprüche 1 bis 5, wobei die Messelektrode (3), die allfälligen Guardelektroden (91, 92, 93, 94, 95) und die allfälligen Masseelektroden (101, 102) streifenförmig ausgeführt sind, und beim Betrieb der Vorrichtung vertikal und insbesondere parallel zu einer Längsachse (a) des Flüssigkeitsbehälters (1), insbesondere des Probenröhrchens, ausgerichtet sind.

7. Vorrichtung nach Anspruch 6, wobei die Messelektrode (3) eine Breite im Bereich von 80 % bis 100 % des Durchmessers des Flüssigkeitsbehälters (1), insbesondere des Probenröhrchens, aufweist, und die erste und zweite Guardelektrode (91, 92) insbesondere je eine Breite von über 100 % des Durchmessers des Flüssigkeitsbehälters (1), insbesondere des Probenröhrchens, aufweisen.

8. Vorrichtung nach einem der Ansprüche 1 bis 7, wobei die Sensorelektronikeinheit (7) ein Signalgenerator umfasst, mit welchem ein Signal (s) zum Anregen der Messelektrode (3) erzeugbar ist, wobei das Signal (s) insbesondere ein sinusförmiges Signal mit einer Frequenz im Bereich von 20 kHz bis 400 kHz oder ein treppenstufenförmiges Signal mit einer Frequenz im Bereich von 20 kHz bis 50 kHz ist, wobei die Frequenz insbesondere unterschiedlich einstellbar ist.

9. Vorrichtung nach Anspruch 8, wobei das Signal (s) zum Anregen der Messelektrode (3) ebenfalls zum Anregen der Guardelektroden (91, 92, 93, 94, 95) verwendbar ist, wobei das Signal (s') zum Anregen der Guardelektroden (91, 92, 93, 94, 95) niederohmig ist, und insbesondere mit einem Pufferverstärker (13) mit Spannungsverstärkung 1 aus dem Signal (s) zum Anregen der Messelektrode (3) erzeugbar ist.

10. Vorrichtung nach einem der Ansprüche 2 bis 9, wobei der Sensorträger (8) als Leiterplatte ausgeführt ist, insbesondere als mehrlagige Leiterplatte.

11. Vorrichtung nach Anspruch 10, wobei die Sensorelektronikeinheit (7) auf derselben Leiterplatte untergebracht ist wie der Sensor (2), wobei die Leiterplatte mindesten zwei Zwischenschichten (Z) zwischen der Vorderseite (V) und der Hinterseite (H) aufweist, wobei sich die Messelektrode (3) sowie die allfällige erste und zweite Guardelektrode (91, 92) sowie die allfällige erste und zweite Masseelektrode (101, 102) sowie die allfällige vierte und fünfte Guardelektrode (94, 95) auf der Vorderseite (V) der Leiterplatte befinden, die allfällige dritte Guardelektrode (93) sich auf einer ersten Zwischenschicht hinter der Vorderseite (V) befindet, eine Massefläche (11) als Abschirmung sich auf einer zweiten Zwischenschicht hinter der ersten Zwischenschicht befindet, wobei die Abschirmung mit der allfälligen ersten und zweiten Masseelektrode (101, 102) elektrisch verbunden ist, und Leiterbahnen für eine Signalführung der Sensorelektronikeinheit (7) sich auf der Hinterseite (H) und allenfalls einer oder mehrerer weiteren Zwischenschichten zwischen der Hinterseite (H) und der Massenfläche (11) befinden.

12. Verfahren zur Steuerung einer optischen Erkennungseinheit mit Hilfe einer kapazitiven Füllstandsmessung in Flüssigkeitsbehältern (1), insbesondere Behälter für Reagenzien oder Probenröhrchen, umfassend die Schritte:
- Bereitstellen einer leitenden Bodenplatte (4), welche horizontal angeordnet ist, und eines Sensors (2) mit einer Messelektrode (3), welche vertikal angeordnet ist, und einer Sensorelektronikeinheit (7), welche mit der Messelektrode (3) und der Bodenplatte (4) verbunden ist;
- Anordnen eines Flüssigkeitsbehälters (1) oder einer Trägereinheit (5) mit mindestens einer Aufnahme (6) zum Aufnehmen eines Flüssigkeitsbehälters (1), insbesondere eines Probenröhrchens, auf der Bodenplatte (4) neben der Messelektrode (3);
- Anregen der Messelektrode (3) mit einem Signal (s);
- Bestimmen eines Messsignals in Abhängigkeit einer Kapazität zwischen der Messelektrode (3) und der Bodenplatte (4); und
- Bestimmen oder Erkennen basierend auf dem Messsignal von mindestens einem aus folgender Liste:
o einen Füllstand des Flüssigkeitsbehälters (1), insbesondere des Probenröhrchens, insbesondere ob der Flüssigkeitsbehälter (1), insbesondere das Probenröhrchen, leer ist und/oder einen vorgegebenen Füllstand über- oder unter schreitet;
∘ ob sich ein Flüssigkeitsbehälter (1), insbesondere ein Probenröhrchen, in einer bestimmten Aufnahme der Trägereinheit (5) befindet;
∘ was für ein Typ Probenröhrchen (1) sich in einer bestimmten Aufnahme (6) der Trägereinheit (5) befindet;
∘ unterschiedliche Merkmale an einer Trägereinheit (5), wie z.B. einzelne Aufnahmen (6), insbesondere Unterteilungen zwischen den Aufnahmen (6);
o um was für eine Art Trägereinheit (5) es sich handelt, wie z.B. eine Trägereinheit (5) geeignet zum Aufnehmen von Probenröhrchen (1) einer bestimmten Grösse bzw. maximalen Füllmenge,
- Steuern der optischen Erkennungseinheit (14) basierend auf dem Messsignal, insbesondere Auslösen eines Prozesses zum Erkennen von Kennzeichen (K) an und/oder Merkmalen von dem Flüssigkeitsbehälter (1), insbesondere einem Probenröhrchen, und/oder von einem/einer darin befindlichen Reagenz oder Probe.

13. Verfahren nach Anspruch 12, weiter umfassend den Schritt:
- Bewegen einer Trägereinheit (5) mit einer Vielzahl von Aufnahmen (6) zum Aufnehmen von Probenröhrchen (1) in horizontaler Richtung an der Messelektrode (3) vorbei,
wobei das Bestimmen des Messsignals während dem Bewegen der Trägereinheit (5) an der Messelektrode (3) vorbei geschieht.

14. Verfahren nach Anspruch 12 oder 13, welches es erlaubt ein Vorhandensein von Schaum im Flüssigkeitsbehälter (1) zu bestimmen, weiter umfassend die Schritte:
- Erzeugen des Signals zum Anregen der Messelektrode (3) mit einer ersten Frequenz, insbesondere in einem Bereich von 1 kHz bis 1 MHz, noch insbesondere in einem Bereich von 300 kHz bis 500 kHz;
- Erzeugen des Signals zum Anregen der Messelektrode (3) mit einer zweiten Frequenz, insbesondere in einem Bereich von 1 MHz bis 50 MHz, noch insbesondere in einem Bereich von 10 MHz bis 15 MHz, wobei die erste und zweite Frequenz unterschiedlich sind; und
- Ausgeben einer Kennung, die ein Vorhandensein von Schaum im Flüssigkeitsbehälter (1), insbesondere in einem Probenröhren, signalisiert, falls eine Differenz zwischen dem Messsignal beim Anregen der Messelektrode (3) mit der ersten Frequenz und dem Messsignal beim Anregen der Messelektrode (3) mit der zweiten Frequenz einen vorgegebenen Schwellwert übersteigt.

15. Verfahren nach einem der Ansprüche 12 bis 14, welches es erlaubt ein Vorhandensein einer bestimmten Flüssigkeit (12), insbesondere ein bestimmtes Reagenz, im Flüssigkeitsbehälter (1) zu bestimmen, weiter umfassend die Schritte:
- Erzeugen des Signals zum Anregen der Messelektrode (3) mit einer ersten Frequenz, insbesondere in einem Bereich von 1 kHz bis 1 MHz;
- Erzeugen des Signals zum Anregen der Messelektrode (3) mit einer zweiten Frequenz, insbesondere in einem Bereich von 1 MHz bis 50 MHz, wobei die erste und zweite Frequenz unterschiedlich sind; und
- Ausgeben einer Kennung, die ein Vorhandensein einer bestimmten Flüssigkeit (12), insbesondere ein bestimmtes Reagenz, im Flüssigkeitsbehälter (1) signalisiert, falls eine Differenz zwischen dem Messsignal beim Anregen der Messelektrode (3) mit der ersten Frequenz und dem Messsignal beim Anregen der Messelektrode (3) mit der zweiten Frequenz einen vorgegebenen Schwellwert übersteigt.

## Claims

1. Device for controlling an optical recognition unit (14) with the help of a capacitive filling level measurement in liquid containers (1), in particular containers for reagents or sample tubes, comprising:
- the optical recognition unit (14) with an optical sensor element;
- a sensor (2) having a measurement electrode (3);
- a conductive base plate (4) suitable for arranging at least one liquid container (1) or a carrier unit (5) having at least one receptacle (6) for receiving a liquid container (1), in particular a sample tube;
- a sensor electronic unit (7) which is connected to the measurement electrode (3) and the base plate (4) and is adapted to determine a capacitance between the measurement electrode (3) and the base plate (4);
- an evaluation unit (A); and
- a control unit (15) for controlling the optical recognition unit (14),
wherein the measurement electrode (3) is arranged substantially perpendicularly to the base plate (4), in particular is arranged vertically to the horizontally arranged base plate (4), and
wherein the evaluation unit (A) is adapted to determine, based on the capacitance, at least one from the following list:
- a filling level of the liquid container (1), in particular of the sample tube, in particular whether the liquid container (1), in particular the sample tube, is empty and/or exceeds or is below a predetermined filling level;
- whether a liquid container (1), in particular a sample tube, is present in the at least one receptacle (6);
- different carrier units (5), such as carrier units (5) for differently sized liquid containers (1), in particular sample tubes;
- different characteristics on a carrier unit (5), such as individual receptacles (6), in particular partitions between the receptacles (6),
and wherein the control unit (15) is connected to the sensor electronics unit (7) or the evaluation unit (A), and a control signal (sc) can be generated by the sensor electronics unit (7) or the evaluation unit (A) depending on the capacitance, and the optical recognition unit (14) is controllable depending on the control signal (sc), in particular a process can be activated for recognizing identifiers (K) on and/or characteristics of the liquid container (1), in particular a sample tube, and/or of a reagent or sample contained therein.

2. Device according to claim 1, wherein the measurement electrode (3) is arranged on a front side (V) of a sensor carrier (8) above a guard electrode (9), wherein the guard electrode (9) is in particular located between the measurement electrode (3) and the base plate (4).

3. Device according to claim 1, wherein the measurement electrode (3) is arranged on a front side (V) of a sensor carrier (8) between a first and a second guard electrode (91, 92).

4. Device according to claim 3, wherein a third guard electrode (93) is arranged on a rear side (H) or an intermediate layer (Z) of the sensor carrier (8), wherein the third guard electrode (93) covers at least the measurement electrode (3), in particular covers the measurement electrode (3) as well as the first and second guard electrode (91, 92).

5. Device according to claim 4, wherein the measurement electrode (3) and the first and second guard electrode (91, 92) are arranged between a first and a second ground electrode (101, 102), and wherein the first and second ground electrode (101, 102) are in turn arranged between a fourth and a fifth guard electrode (94, 95), wherein the first and second ground electrode (101, 102) are electrically connected with the base plate (4).

6. Device according to one of claims 1 to 5, wherein the measurement electrode (3), the possible guard electrodes (91, 92, 93, 94, 95) and the possible ground electrodes (101, 102) are designed in the form of strips and are aligned vertically and in particular parallel to a longitudinal axis (a) of the liquid container (1), in particular the sample tube, during operation of the device.

7. Device according to claim 6, wherein the measuring electrode (3) has a width in the range from 80 % to 100 % of the diameter of the liquid container (1), in particular the sample tube, and the first and second guard electrode (91, 92) in particular each have a width of more than 100 % of the diameter of the liquid container (1), in particular the sample tube.

8. Device according to one of claims 1 to 7, wherein the sensor electronics unit (7) comprises a signal generator with which a signal (s) for exciting the measuring electrode (3) can be generated, wherein the signal (s) is in particular a sinusoidal signal with a frequency in the range from 20 kHz to 400 kHz or a stairstep-shaped signal with a frequency in the range from 20 kHz to 50 kHz, wherein the frequency is in particular adjustable to different values.

9. Device according to claim 8, wherein the signal (s) for exciting the measuring electrode (3) is also used for exciting the guard electrodes (91, 92, 93, 94, 95), wherein the signal (s') for exciting the guard electrodes (91, 92, 93, 94, 95) is of low impedance, and can in particular be generated from the signal (s) for exciting the measuring electrode (3) with a buffer amplifier (13) with voltage gain 1.

10. Device according to one of claims 2 to 9, wherein the sensor carrier (8) is designed as a printed circuit board, in particular as a multi-layer printed circuit board.

11. Device according to claim 10, wherein the sensor electronics unit (7) is located on the same printed circuit board as the sensor (2), wherein the printed circuit board has at least two intermediate layers (Z) between the front side (V) and the rear side (H), wherein the measuring electrode (3) and the possible first and second guard electrode (91, 92) as well as the possible first and second ground electrode (101, 102) as well as the possible fourth and fifth guard electrode (94, 95) are located on the front side (V) of the printed circuit board, the possible third guard electrode (93) is located on a first intermediate layer behind the front side (V), a ground surface (11) as shield is located on a second intermediate layer behind the first intermediate layer, wherein the shield is electrically connected with the possible first and second ground electrode (101, 102), and conductor tracks for signal conduction of the sensor electronics unit (7) are located on the rear side (H) and possibly on one or more further intermediate layers between the rear side (H) and the ground surface (11).

12. Method for controlling an optical recognition unit (14) with the help of a capacitive filling level measurement in liquid containers (1), in particular containers for reagents or sample tubes, comprising the steps of:
- providing a conductive base plate (4), which is arranged horizontally, and a sensor (2) having a measurement electrode (3), which is arranged vertically, and a sensor electronic unit (7), which is connected to the measurement electrode (3) and the base plate (4);
- arranging a liquid container (1) or a carrier unit (5) having at least one receptacle (6) for accommodating a liquid container (1), in particular a sample tube, on the base plate (4) next to the measurement electrode (3) ;
- exciting the measurement electrode (3) with a signal (s) ;
- determining a measurement signal depending on a capacitance between the measurement electrode (3) and the base plate (4); and
- determining or recognizing, based on the measurement signal, at least one from the following list:
o a filling level of the liquid container (1), in particular of the sample tube, in particular whether the liquid container (1), in particular the sample tube, is empty and/or exceeds or is below a predetermined filling level;
o whether a liquid container (1), in particular a sample tube, is present in a particular receptacle (6) of the carrier unit (5);
o which type of sample tube (1) is located in a particular receptacle (6) of the carrier unit (5);
o different characteristics on a carrier unit (5), such as individual receptacles (6), in particular partitions between the receptacles (6);
o what kind of carrier unit (5) it is, such as a carrier unit (5) adapted to receive sample tubes (1) of a certain size or maximum filling capacity;
- controlling the optical recognition unit (14) based on the measurement signal, in particular triggering a process for recognizing identifiers (K) on and/or characteristics of the liquid container (1), in particular a sample tube, and/or of a reagent or sample located therein.

13. Method according to claim 12, further comprising the step of:
- moving a carrier unit (5) with a plurality of receptacles (6) for accommodating sample tubes (1) in a horizontal direction past the measurement electrode (3), wherein the determination of the measurement signal is carried out while moving the carrier unit (5) past the measurement electrode (3).

14. Method according to claim 12 or 13, which allows to determine a presence of foam in the liquid container (1), further comprising the steps:
- generating the signal for exciting the measuring electrode (3) with a first frequency, in particular in a range from 1 kHz to 1 MHz, more particularly in a range from 300 kHz to 500 kHz;
- generating the signal for exciting the measuring electrode (3) with a second frequency, in particular in a range from 1 MHz to 50 MHz, more particularly in a range from 10 MHz to 15 MHz, wherein the first and second frequency are different; and
- outputting an identifier indicating a presence of foam in the liquid container (1), in particular in a sample tube, if a difference between the measuring signal when exciting the measuring electrode (3) with the first frequency and the measuring signal when exciting the measuring electrode (3) with the second frequency exceeds a predetermined threshold value.

15. The method according to one of claims 12 to 14, which allows to determine the presence of a particular liquid (12), in particular a particular reagent, in the liquid container (1), further comprising the steps:
- generating the signal for exciting the measuring electrode (3) with a first frequency, in particular in a range from 1 kHz to 1 MHz;
- generating the signal for exciting the measuring electrode (3) with a second frequency, in particular in a range from 1 MHz to 50 MHz, wherein the first and second frequencies are different; and
- outputting an identifier indicating a presence of a particular liquid (12), in particular a particular reagent, in the liquid container (1) if a difference between the measuring signal when exciting the measuring electrode (3) with the first frequency and the measuring signal when exciting the measuring electrode (3) with the second frequency exceeds a predetermined threshold value.

## Revendications

1. Dispositif de commande d'une unité de détection optique (14) faisant appel à une mesure capacitive du niveau de remplissage de récipients de liquide (1), en particulier des récipients pour réactifs ou tubes à essai, comprenant :
- l'unité de détection optique (14) munie d'un élément de capteur optique ;
- un capteur (2) muni d'une électrode de mesure (3) ;
- un socle conducteur (4) conçu pour disposer au moins un récipient de liquide (1) ou une unité de support (5) munie d'au moins un logement (6) destiné à recevoir un récipient de liquide (1), en particulier un tube à essai ;
- une unité électronique de capteur (7) qui est raccordée à l'électrode de mesure (3) et au socle (4) et qui est conçue pour déterminer une capacité entre l'électrode de mesure (3) et le socle (4) ;
- une unité d'évaluation (A) ; et
- une unité de commande (15) destinée à commander l'unité de détection optique (14),
dans lequel l'électrode de mesure (3) est agencée de manière sensiblement perpendiculaire au socle (4), en particulier verticalement par rapport au socle (4) agencé horizontalement, et
dans lequel l'unité d'évaluation (A) est conçue pour détecter, sur la base de la capacité, au moins un paramètre parmi la liste suivante :
- un niveau de remplissage du récipient de liquide (1), en particulier du tube à essai, en particulier détecter si le récipient de liquide (1), en particulier le tube à essai, est vide et/ou si le niveau de remplissage dépasse ou est inférieur à un niveau de remplissage prédéterminé ;
- détecter la présence d'un récipient de liquide (1), en particulier d'un tube à essai, dans le au moins un logement (6) ;
- détecter différentes unités de support (5), comme par exemple des unités de support (5) pour des récipients de liquide (1), en particulier des tubes à essai, de différentes tailles ;
- détecter différentes caractéristiques au niveau d'une unité de support (5), comme par exemple différents logements (6), en particulier les séparations entre les logements (6),
et dans lequel l'unité de commande (15) est raccordée à l'unité électronique de capteur (7) ou à l'unité d'évaluation (A), l'unité électronique de capteur (7) ou l'unité d'évaluation (A) pouvant générer un signal de commande (sc) en fonction de la capacité, et l'unité de détection optique (14) pouvant être commandée en fonction du signal de commande (sc), un procédé pour détecter des caractéristiques (K) du récipient de liquide (1), en particulier du tube à essai, pouvant notamment être déclenché par un réactif ou un échantillon contenu dans ledit récipient ou tube à essai.

2. Dispositif selon la revendication 1, dans lequel l'électrode de mesure (3) est agencée sur une face avant (V) d'un support de capteur (8) au-dessus d'une électrode de garde (9), l'électrode de garde (9) se trouvant en particulier entre l'électrode de mesure (3) et le socle (4) .

3. Dispositif selon la revendication 1, dans lequel l'électrode de mesure (3) est agencée sur une face avant (V) d'un support de capteur (8) entre une première et une deuxième électrodes de garde (91, 92).

4. Dispositif selon la revendication 3, dans lequel une troisième électrode de garde (93) est agencée sur une face arrière (H) ou sur une couche intermédiaire (Z) du support de capteur (8), la troisième électrode de garde (93) recouvrant au moins l'électrode de mesure (3), recouvrant en particulier l'électrode de mesure (3) ainsi que la première et la deuxième électrodes de garde (91, 92).

5. Dispositif selon la revendication 4, dans lequel l'électrode de mesure (3) ainsi que la première et la deuxième électrodes de garde (91, 92) sont agencées entre une première et une deuxième électrodes de masse (101, 102), la première et la deuxième électrodes de masse (101, 102) étant agencées quant à elles entre une quatrième et une cinquième électrodes de garde (94, 95), la première et la deuxième électrodes de masse (101, 102) étant raccordées électriquement au socle (4).

6. Dispositif selon l'une des revendications 1 à 5, dans lequel l'électrode de mesure (3), les éventuelles électrodes de garde (91, 92, 93, 94, 95) et les éventuelles électrodes de masse (101, 102) sont réalisées sous forme de bandes et sont orientées, pendant le fonctionnement du dispositif, verticalement et en particulier parallèlement à un axe longitudinal (a) du récipient de liquide (1), en particulier du tube à essai.

7. Dispositif selon la revendication 6, dans lequel l'électrode de mesure (3) présente une largeur dans la plage de 80 % à 100 % du diamètre du récipient de liquide (1), en particulier du tube à essai, et dans lequel la première et la deuxième électrodes de garde (91, 92) présentent en particulier chacune une largeur supérieure à 100 % du diamètre du récipient de liquide (1), en particulier du tube à essai.

8. Dispositif selon l'une des revendications 1 à 7, dans lequel l'unité électronique de capteur (7) comprend un générateur de signal qui permet de générer un signal (s) pour exciter l'électrode de mesure (3), le signal (s) étant en particulier un signal sinusoïdal avec une fréquence comprise dans la plage allant de 20 kHz à 400 kHz ou un signal en forme d'escalier avec une fréquence comprise dans la plage allant de 20 kHz à 50 kHz, la fréquence pouvant notamment être réglée différemment.

9. Dispositif selon la revendication 8, dans lequel le signal (s) destiné à exciter l'électrode de mesure (3) peut également être utilisé pour exciter les électrodes de garde (91, 92, 93, 94, 95), le signal (s') pour exciter les électrodes de garde (91, 92, 93, 94, 95) étant à basse valeur ohmique, et pouvant en particulier être généré avec un amplificateur tampon (13) avec une amplification de tension 1 à partir du signal (s) pour exciter l'électrode de mesure (3).

10. Dispositif selon l'une des revendications 2 à 9, dans lequel le support de capteur (8) est réalisé sous la forme d'un circuit imprimé, en particulier un circuit imprimé multicouche.

11. Dispositif selon la revendication 10, dans lequel l'unité électronique de capteur (7) est logée sur le même circuit imprimé que le capteur (2), le circuit imprimé présentant au moins deux couches intermédiaires (Z) entre la face avant (V) et la face arrière (H), l'électrode de mesure (3) ainsi que les éventuelles première et deuxième électrodes de garde (91, 92), les éventuelles première et deuxième électrodes de masse (101, 102) et les éventuelles quatrième et cinquième électrodes de garde (94, 95) se trouvant sur la face avant (V) du circuit imprimé, l'éventuelle troisième électrode de garde (93) se trouvant sur une première couche intermédiaire derrière la face avant (V), une surface de masse (11) faisant office de blindage se trouvant sur une deuxième couche intermédiaire derrière la première couche intermédiaire, le blindage étant raccordé électriquement aux éventuelles première et deuxième électrodes de masse (101, 102), et des circuits pour un guidage de signal de l'unité électronique de capteur (7) se trouvant sur la face arrière (H) et le cas échéant sur une ou plusieurs autres couches intermédiaires entre la face arrière (H) et la surface de masse (11).

12. Procédé pour commander une unité de détection optique (14) faisant appel à une mesure capacitive du niveau de remplissage dans des récipients de liquide (1), en particulier des récipients pour réactifs ou des tubes à essai, comprenant les étapes consistant à :
- fournir un socle conducteur (4) agencé horizontalement et un capteur (2) muni d'une électrode de mesure (3) agencée verticalement, et une unité électronique de capteur (7) raccordée à l'électrode de mesure (3) et au socle (4) ;
- disposer un récipient de liquide (1) ou une unité de support (5) munie d'au moins un logement (6) pour recevoir un récipient de liquide (1), en particulier un tube à essai, sur le socle (4) à côté de l'électrode de mesure (3) ;
- exciter l'électrode de mesure (3) avec un signal (s) ;
- déterminer un signal de mesure en fonction d'une capacité entre l'électrode de mesure (3) et le socle (4) ; et
- déterminer ou détecter sur la base du signal de mesure au moins un paramètre parmi la liste suivante :
o un niveau de remplissage du récipient de liquide (1), en particulier du tube à essai, détecter en particulier si le récipient de liquide (1), en particulier le tube à essai, est vide et/ou si le niveau de remplissage dépasse ou est inférieur à un niveau de remplissage prédéfini ;
o détecter la présence d'un récipient de liquide (1), en particulier d'un tube à essai, dans un logement déterminé (6) de l'unité de support (5) ;
o détecter le type de tube à essai (1) qui se trouve dans un logement déterminé (6) de l'unité de support (5) ;
o détecter différentes caractéristiques sur l'unité de support (5), comme par exemple les différents logements (6), en particulier les séparations entre les logements (6) ;
o détecter le type d'unité de support (5) dont il s'agit, comme par exemple une unité de support (5) conçue pour recevoir des tubes à essai (1) d'une dimension particulière ou encore la quantité de remplissage maximale,
- commander l'unité de détection optique (14) sur la base du signal de mesure, notamment déclencher un procédé pour détecter des caractéristiques (K) du récipient de liquide (1), en particulier d'un tube à essai, et/ou des caractéristiques d'un réactif ou d'un échantillon se trouvant dans ledit récipient.

13. Procédé selon la revendication 12, comprenant en outre l'étape consistant à :
- faire passer une unité de support (5) comportant une pluralité de logements (6) pour recevoir des tubes à essai (1) horizontalement devant l'électrode de mesure (3),
la détermination du signal de mesure intervenant pendant que l'unité de support (5) passe devant l'électrode de mesure (3).

14. Procédé selon la revendication 12 ou 13, permettant de déterminer la présence de mousse dans le récipient de liquide (1), comprenant en outre les étapes consistant à :
- générer le signal pour exciter l'électrode de mesure (3) avec une première fréquence, en particulier dans une plage allant de 1 kHz à 1 MHz, plus particulièrement dans une plage allant de 300 kHz à 500 kHz ;
- générer le signal pour exciter l'électrode de mesure (3) avec une deuxième fréquence, en particulier dans une plage allant de 1 MHz à 50 MHz, plus particulièrement dans une plage allant de 10 MHz à 15 MHz, la première et la deuxième fréquences étant différentes ; et
- fournir un code qui signale la présence de mousse dans le récipient de liquide (1), en particulier dans un tube à essai, dans le cas où la différence entre le signal de mesure lors de l'excitation de l'électrode de mesure (3) avec la première fréquence et le signal de mesure lors de l'excitation de l'électrode de mesure (3) avec la deuxième fréquence dépasse une valeur seuil prédéfinie.

15. Procédé selon l'une des revendications 12 à 14, permettant de déterminer la présence d'un liquide particulier (12), en particulier un réactif particulier, dans le récipient de liquide (1), comprenant en outre les étapes consistant à :
- générer le signal pour exciter l'électrode de mesure (3) avec une première fréquence, en particulier dans une plage allant de 1 kHz à 1 MHz ;
- générer le signal pour exciter l'électrode de mesure (3) avec une deuxième fréquence, en particulier dans une plage allant de 1 MHz à 50 MHz, la première et la deuxième fréquences étant différentes ; et
- fournir un code qui signale la présence d'un liquide particulier (12), en particulier d'un réactif particulier, dans le récipient de liquide (1), dans le cas où la différence entre le signal de mesure lors de l'excitation de l'électrode de mesure (3) avec la première fréquence et le signal de mesure lors de l'excitation de l'électrode de mesure (3) avec la deuxième fréquence dépasse une valeur seuil prédéfinie.
